# EUROPEAN PATENT APPLICATION

(11) **EP 4 654 280 A2**
(43) Date of publication of application: **26.11.2025**
(21) Application number: 25177717.3
(22) Date of filing: 20.05.2025
(51) Int. Cl.: H01M 4/131, H01M 4/36, H01M 4/505, H01M 4/525, C01G 53/50

(54) **POSITIVE ELECTRODE ACTIVE MATERIAL FOR RECHARGEABLE LITHIUM BATTERY AND RECHARGEABLE LITHIUM BATTERY INCLUDING THE POSITIVE ELECTRODE ACTIVE MATERIAL**

(30) Priority: 22.05.2024 KR 20240066327
(71) Applicant: SAMSUNG SDI CO., LTD., Yongin-si, Gyeonggi-do 17084 (KR)
(72) Inventor: SEOG, Jihyun, 17084 Yongin-si (KR); KIM, Minhan, 17084 Yongin-si (KR); KIM, Jinhwa, 17084 Yongin-si (KR); CHAE, Youngjoo, 17084 Yongin-si (KR)
(74) Representative: Marks & Clerk LLP

(57) **Abstract**

A positive electrode active material comprises: (a) first particles including a first lithium composite oxide having a spinel crystal structure, (b) second particles including a second lithium composite oxide having a layered crystal structure, and (c) third particles including a third lithium composite oxide having a layered crystal structure, where an average particle diameter of the second particles is greater than an average particle diameter of the third particles, and where each of the first, second and third particles have a first, second and third weight ratio respectively relative to a total weight of the first, second, and third particles, and where the first weight ratio is greater than a sum of the second weight ratio and the third weight ratio. Also disclosed are positive electrodes including the positive electrode active materials, and rechargeable lithium batteries including the positive electrodes.

## Description

### BACKGROUND

The present invention relates to a positive electrode active material, a method of preparing the positive electrode active material, a positive electrode including the positive electrode active material, and a rechargeable lithium battery including the positive electrode active material.

A battery generates an electric energy through physical or chemical reactions to supply the generated electric energy. A battery may be used, for example, when no alternating current (AC) power is available to supply to buildings or when direct current (DC) power is desired or required in accordance with the living or usage environment involving one or more suitable electric and/or electronic devices.

Among batteries, a primary battery and a secondary battery that use a chemical reaction are generally utilized. A primary battery is a consumable battery referred to as a dry battery. In contrast, the secondary battery is a rechargeable battery in which oxidation and reduction reactions are repeated at positive and negative electrodes. The battery is charged when a current causes the reduction reaction at the positive electrode, and is discharged when the oxidation reaction is performed at the positive electrode. The secondary battery undergoes repeated charge and discharge cycles.

Lithium composite oxide containing high amounts of nickel has attracted considerable attention as a positive active material of rechargeable lithium batteries. Such a positive active material has a high energy density, but the high amount of nickel may cause problems of a significant reduction in lifespan and stability of batteries.

### SUMMARY

The present invention provides a positive electrode active material for a rechargeable lithium battery having high energy density and improved lifetime characteristics.

The present invention also provides a rechargeable lithium battery having excellent output, increased lifetime, and enhanced capacity retention characteristics.

According to a first aspect of the present invention there is provided a positive electrode active material comprising: (a) first particles that include a first lithium composite oxide having a spinel crystal structure; (b) second particles that includes a second lithium composite oxide having a layered crystal structure; and (c) third particles that include a third lithium composite oxide having a layered crystal structure. An average diameter of the second particles is greater than an average diameter of the third particles. The first particles have a first weight ratio relative to a total weight of the first, second, and third particles, the second particles have a second weight ratio relative to the total weight of the first, second, and third particles, and the third particles have a third weight ratio relative to the total weight of the first, second, and third particles. The first weight ratio is greater than a sum of the second weight ratio and the third weight ratio.

According to a second aspect of the present invention there is provided a positive electrode comprising the aforementioned positive electrode active material of the first aspect of the invention.

According to a third aspect of the present invention there is provided a rechargeable lithium battery comprising the aforementioned positive electrode of the second aspect of the invention.

At least some of the above and other features of the invention are set out in the claims.

### BRIEF DESCRIPTION OF DRAWINGS

FIG. 1 is a simplified conceptual diagram showing a rechargeable lithium battery according to an embodiment of the present invention.
FIG. 2 is a diagram showing a positive electrode active material layer according to an embodiment of the present invention.
FIG. 3 is a cross-sectional view showing a large-sized lithium composite oxide according to an embodiment of the present invention.
FIG. 4 is a simplified perspective view showing a rechargeable lithium battery according to an embodiment of the present disclosure.

### DETAILED DESCRIPTION OF EMBODIMENTS

In order to sufficiently understand the configuration and effect of the present disclosure, some embodiments of the present disclosure will be described with reference to the accompanying drawings. It should be noted, however, that the present disclosure is not limited to the following embodiments, and may be implemented in various forms. The embodiments are provided only to disclose the present disclosure and allow those skilled in the art to fully understand the scope of the present disclosure.

In this description, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Some embodiments detailed in this description will be discussed with reference to sectional and/or plan views as example views of the present disclosure. In the drawings, thicknesses of layers and regions are exaggerated for effectively explaining the technical contents. Accordingly, example regions illustrated in the drawings have general properties, and example shapes of regions illustrated in the drawings are used to disclose specific example shapes but do not limit the scope of the present disclosure. It will be understood that, although the terms "first", "second", "third", etc. may be used herein to describe various elements, these elements should not be limited by these terms. These terms are only used to distinguish one element from another element. Some embodiments explained and illustrated herein include complementary embodiments thereof.

The terminology used herein is for the purpose of describing particular embodiments only and is not intended to limit the present disclosure. As used herein, the singular forms are intended to include the plural forms as well. The terms "comprises/includes" and/or "comprising/including" used in the specification do not exclude the presence or addition of one or more other components.

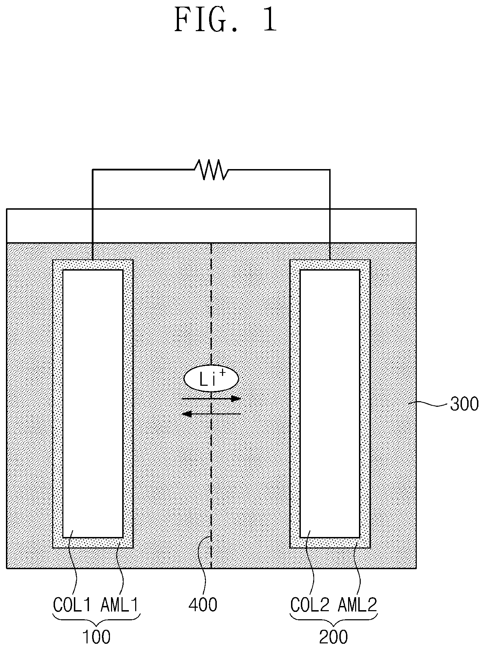

FIG. 1 is a simplified conceptual diagram showing a rechargeable lithium battery according to an embodiment of the present disclosure. Referring to FIG. 1, a rechargeable lithium battery may include a positive electrode 100, a negative electrode 200, an electrolyte 300, and a separator 400.

The positive electrode 100 and the negative electrode 200 may be spaced apart from each other across the separator 400. The separator 400 may be disposed between the positive electrode 100 and the negative electrode 200. The positive electrode 100, the negative electrode 200, and the separator 400 may be in contact with the electrolyte 300. The positive electrode 100, the negative electrode 200, and the separator 400 may be impregnated in the electrolyte 300.

The electrolyte 300 may be a medium through which lithium ions are transmitted between the positive electrode 100 and the negative electrode 200. The lithium ions in the electrolyte 300 may pass through the separator 400 to move toward the positive electrode 100 or the negative electrode 200.

The positive electrode 100 may include a first current collector COL1 and a positive electrode active material layer AML1 on the first current collector COL1. The first current collector COL1 may include metal, such as one or more of aluminium, copper, nickel-plated copper, stainless steels, nickel, titanium, palladium, and aluminium-cadmium alloys. The first current collector COL1 may be shaped like a film, a sheet, a foil, a mesh, a net, a porous substance, a foam, or nonwoven fabric.

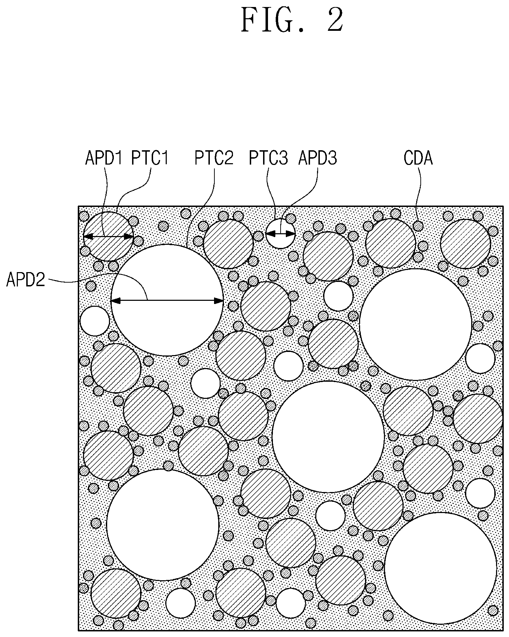

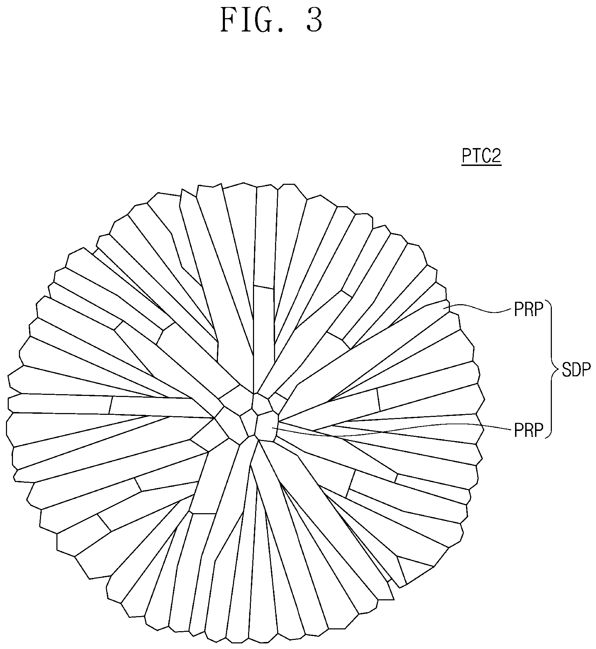

The positive electrode active material AML1 may include a binder, a conductive material, and a positive electrode active material. The positive electrode active material may be included in an amount of about 80 wt% to about 99 wt%, for example, about 85 wt% to about 98 wt%, based on the total amount of the positive electrode active material layer AML1. The positive electrode active material may be a source of lithium ions. The positive electrode active material may be a lithium transition metal oxide, which may include not only lithium but also at least one transition metal. The positive electrode active material according to some embodiments of the present disclosure will be described in more detail below with reference to FIGS. 2 and 3.

The conductive material may provide the positive electrode active material layer AML1 with conductivity. The conductive material may include at least one of carbon-based materials (e.g., graphite, carbon black, acetylene black, Ketjen black, channel black, furnace black, lamp black, thermal black, and carbon fiber), metal powders, metal fibers, conductive whiskers, conductive metal oxides, conductive polymers, and a combination thereof. The conductive material may be included in an amount of about 1 wt% to about 20 wt% based on the total weight of the positive electrode active material layer AML1.

The binder may increase a bonding force between the positive electrode active material and the first current collector COL1. For example, the binder may include at least one of polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene monomer (EPDM), a sulfonated EPDM, styrene-butadiene rubber (SBR), fluorine rubber, and a combination thereof. The binder may be included in an amount of about 1 wt% to about 20 wt% based on the total weight of the positive electrode active material layer AML1.

The negative electrode 200 may include a second current collector COL2 and a negative electrode active material layer AML2 on the second current collector COL2. A description of the second current collector COL2 may be the same as or similar to that of the first current collector COL1. The second current collector COL2 may include metal that is the same as or different from that of the first current collector COL1. The second current collector COL2 may have a shape that is the same as or different from that of the first current collector COL 1.

The negative electrode active material layer AML2 may include a binder, conductive material, and a negative electrode active material. The binder and the conductive material may be the same as those discussed above with respect to the positive electrode active material layer AML1. The negative electrode active material may be included in an amount of about 80 wt% to about 99 wt%, for example, about 85 wt% to about 98 wt%, based on the total weight of the negative electrode active material layer AML2. The negative electrode active material may include at least one of carbonaceous materials, lithium metal, lithium metal compounds, silicon, silicon compounds, tin, or tin compounds. Metal oxide, such as TiO₂ or SnO₂, whose electrical potential is less than about 2 V, may also be utilized as the negative electrode active material. The carbonaceous material may include one or more of low-crystalline carbon and high-crystalline carbon.

The separator 400 may include a porous polymer film formed of a polyolefin-base polymer such as an ethylene homopolymer, a propylene homopolymer, an ethylene-butene copolymer, an ethylene-hexene copolymer, and an ethylene-methacrylate copolymer. The separator 400 may include a single substance of a porous polymer film or a stack substance of a plurality of porous polymer films. In an embodiment of the present disclosure, the separator 400 may include an ordinary porous nonwoven fabric, such as a high-melting-point glass fiber or a polyethylene terephthalate fiber.

The electrolyte 300 may include a salt having a structure of A⁺B⁻. The A⁺ ion may include at least one alkali metal cation selected from Li⁺, Na⁺, and K⁺. The B⁻ ion may include at least one anion selected from F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

In an embodiment of the present disclosure, the electrolyte 300 may be utilized by dissolving a salt in an organic solvent. The organic solvent may include propylene carbonate (PC), ethylene carbonate (EC), diethyl carbonate (DEC), dimethyl carbonate (DMC), dipropyl carbonate (DPC), fluoroethylene carbonate (FEC), dimethyl sulfoxide, acetonitrile, dimethoxyethane, diethoxyethane, tetrahydrofuran, N-methyl-2-pyrrolidone (NMP), ethyl methyl carbonate (EMC), γ-buturolactone, or any mixture thereof.

A casing commonly utilized in the art may be adopted as a casing of a rechargeable lithium battery according to some embodiments of the present disclosure, and there may be no limitation on external appearance in accordance with the use of batteries. For example, the casing of rechargeable lithium batteries may have a cylindrical shape, a prismatic shape, a pouch shape, or a coin shape.

FIG. 2 is a diagram showing a positive electrode active material layer according to an embodiment of the present disclosure. Referring to FIG. 2, the positive electrode active material layer includes a plurality of first particles PTC1, a plurality of second particles PTC2, and a plurality of third particles PTC3.

The first particles PTC1 may have a first average particle diameter APD1. The second particles PTC2 have a second average particle diameter APD2, and the third particles PTC3 have a third average particle diameter APD3. The third average particle diameter APD3 is less than the second average particle diameter APD2. The third average particle diameter APD3 may be less than the first average particle diameter APD1. The first average particle diameter APD1 may be greater to or less than the second average particle diameter APD2.

The first average particle diameter APD1 may range from about 1.0 µm to about 10.0 µm. The second average particle diameter APD2 may range from about 10.0 µm to about 20.0 µm. The third average particle diameter APD3 may range from about 1.0 µm to about 5.0 µm. The average particle diameter APD2 of the second particles may be about four times to about twenty times greater than the average particle diameter APD3 of the third particles. The term "average particle diameter", or D50, used in the present disclosure may refer to a particle diameter when a volume accumulation percentage corresponds to 50% in particle diameter distribution obtained from a volume of particles. The average diameter may be measured, for example, by a particle size analyzer (PSA). In the present disclosure, the second particles PTC2 may be called 'large' particles, and the third particles PTC3 may be called 'small' particles.

FIG. 3 illustrates one second particle PTC2 according to an embodiment of the present disclosure. Referring to FIG. 3, the second particle PTC2 may be shaped like a secondary particle SDP in which a plurality of primary particles PRP are agglomerated. The plurality of primary particles PRP may be radially arranged from a center to a surface of the secondary particle SDP.

Referring again to FIG. 2, the third particles PTC3 may have a granular or spherical shape. In an embodiment of the present disclosure, the third particles PTC3 may have a single particle shape. The single particle shape may include a primary particle shape or a secondary particle shape obtained by aggregating several primary particles. The single particle shape may include one crystal grain or several crystal grains. The crystal grain may be a minimum unit in which lithium composite oxide has a single crystal orientation. For example, the third particle PTC3 may include one primary particle, a single particle, or a secondary particle in which a plurality of primary particles are integrally agglomerated.

The positive electrode active material according to an embodiment of the present disclosure may have a bimodal shape including large particles (e.g., PTC2) and small particles (e.g., PTC3) having different average particle diameters. The small particles may fill pores between the large particles, and, thus, the positive electrode active material may have an increased integration density. For example, the positive electrode active material according to some embodiments of the present disclosure may have a relatively high energy density per unit volume.

The first particles PTC1 include a first lithium composite oxide having a spinel crystal structure, and may be represented by any of Chemical Formulas 1 to 3 below.

Chemical Formula 1: LiₐM₂O₄

In Chemical Formula 1, 1.0≤a≤1.1, and M may be manganese and one or more non-manganese elements of Groups 4 to 13.

Chemical Formula 2: LiₐMn_{b}M1_{c}M2₄O₄

In Chemical Formula 2, 0.9≤a≤1.1, 0<b≤2.0, 0≤c<2.0, 0≤d<0.1, and b+c+d=2; and M1 and M2 may be different from each other and may each independently be one of Co, Ni, V, Cr, Fe, Zr, Re, Al, B, Ge, Ru, Sn, Ti, Nb, Mo, and Pt.

Chemical Formula 3: LiₐMn_{b}Co_{c}M2_{d}O₄

In Chemical Formula 3, 0.9≤a≤1.1, 0<b≤2.0, 0<c<2.0, 0≤d<0.1, and b+c+d=2; and M2 may be one selected from V, Cr, Fe, Zr, Re, Al, B, Ge, Ru, Sn, Ti, Nb, Mo, and Pt.

The second particles PTC2 include a second lithium composite oxide, and the third particles PTC3 include a third lithium composite oxide. The second lithium composite oxide may be different to the third lithium composite oxide. The second and third lithium composite oxides may each have a layered crystal structure and may each independently be represented by any of Chemical Formulas 4 to 7 below.

Chemical Formula 4: LiₐM'O₂

In Chemical Formula 4, 0.9≤a≤1.1, M' may be nickel and one or more non-nickel elements of Groups 4 to 13, and an amount of nickel in M' may be equal to or greater than about 70 at% and less than 100 at%.

Chemical Formula 5: LiₐNi_{b}M3_{c}M4_{d}M5ₑO₂

In Chemical Formula 5, 0.9≤a≤1.1, 0.7<b<1.0, 0<c<0.3, 0<d<0.3, 0≤e<0.1, and b+c+d+e=1; M3, M4, and M5 may be different from each other and may each independently be one of Mn, V, Cr, Fe, Co, Zr, Re, Al, B, Ge, Ru, Sn, Ti, Nb, Mo, and Pt.

Chemical Formula 6: LiₐNi_{b}Co_{c}Mn_{d}M5ₑO₂

In Chemical Formula 6, 0.9≤a≤1.1, 0.7<b<1.0, 0<c<0.3, 0<d<0.3, 0≤e<0.1, b+c+d+e=1; and M5 may be one of V, Cr, Fe, Zr, Re, Al, B, Ge, Ru, Sn, Ti, Nb, Mo, and Pt.

Chemical Formula 7: aLi₂MnO₃-(1-a)LiM'O₂

In Chemical Formula 7, 0<a<1, and M' may be two or more of Ni, Co, Mn, V, Cr, Fe, Zr, Re, Al, B, Ge, Ru, Sn, Ti, Nb, Mo, and Pt.

In an embodiment, the first particles PTC1 in the positive electrode active material may have a weight ratio of about 60 wt% to about 90 wt%, about 60 wt% to about 80 wt%, or about 70 wt% to about 80 wt% relative to the total weight of the first, second, and third particles PTC1, PTC2, and PTC3. The second particles PTC2 in the positive electrode active material may have a weight ratio of about 7 wt% to about 30 wt% or about 10 wt% to about 21 wt% relative to the total weight of the first, second, and third particles PTC1, PTC2, and PTC3. The third particles PTC3 in the positive electrode active material may have a weight ratio of about 3 wt% to about 12 wt% or about 3 wt% to about 9 wt% relative to the total weight of the first, second, and third particles PTC1, PTC2, and PTC3. When the first, second, and third particles PTC1, PTC2, and PTC3 have these weight ratios, a rechargeable lithium battery including the positive electrode active material may have improved output and lifetime properties.

When the first particles PTC1, whose structural stability is excellent, occupies a weight ratio of about 60 wt% to about 90 wt% in the positive electrode active material, the positive electrode active material may have superior structural stability. When the positive electrode active material includes about 10 wt% to about 40 wt% of the second and third particles PTC2 and PTC3, which have high amounts of nickel and layered crystal structures, the positive electrode active material may have improved lifetime and capacity characteristics as compared to a positive electrode active material including only the first particles PTC1.

Referring back to FIG. 2, the positive electrode active material layer may further include conductive material CDA between the first, second, and third particles PTC1, PTC2, and PTC3. The conductive material CDA may be attached (or provided) on surfaces of each of the first, second, and third particles PTC1, PTC2, and PTC3. A density of the conductive material CDA on the first particles PTC1 may be greater than a density of the conductive material CDA on the second particles PTC2. The density of the conductive material CDA on the first particles PTC1 may be greater than a density of the conductive material CDA on the third particles PTC3. In some embodiments, the conductive material CDA may be more concentrated on the first particles PTC1 than on the second and third particles PTC2 and PTC3.

In the present disclosure, the density of the conductive material CDA may be defined to refer to an amount of the conductive material CDA attached to surfaces of an active material particle per unit surface area of the active material particles. As conductive materials may be more concentrated around a spinel crystal structured particle occupying a high mass ratio, there may be an improvement in conductivity of the positive electrode active material layer according to the present disclosure.

The positive electrode 100 of FIG. 1 may be manufactured by a typical positive electrode manufacturing method except for the use of a positive electrode active material according to some embodiments of the present disclosure. For example, a positive electrode active material of the present disclosure, a binder, and a conductive material may be dissolved or dispersed in a solvent to prepare a mixture. The binder and the conductive material may be the same as that discussed above in the positive electrode active material layer AML1 of FIG. 1. The mixture may be coated on the first current collector COL1, and then dried and pressed to manufacture the positive electrode 100.

The solvent may be a typically used solvent in the art, and, for example, may include at least one of dimethyl sulfoxide (DMSO), isopropyl alcohol, N-methylpyrrolidone (NMP), acetone, water, and a combination thereof.

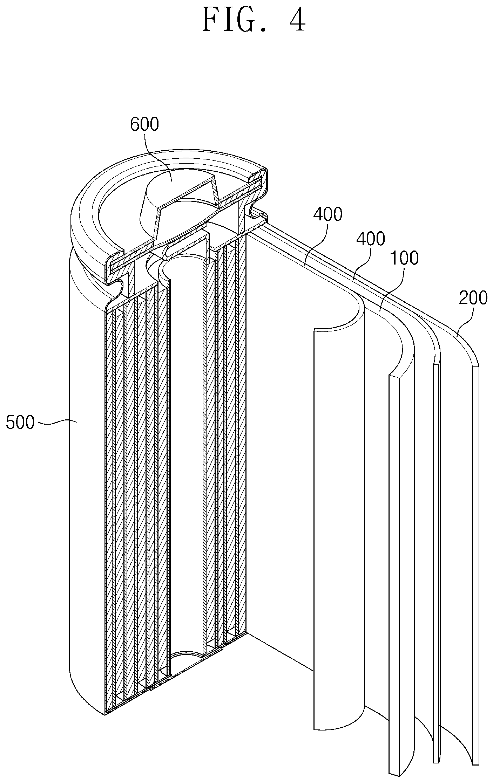

FIG. 4 is a simplified perspective view showing a rechargeable lithium battery according to an embodiment of the present disclosure. Referring to FIG. 4, a rechargeable lithium battery may include a positive electrode 100, a negative electrode 200, and a separator 400. A description of the positive electrode 100, the negative electrode 200, and the separator 400 of FIG. 4 may be substantially the same as that discussed above in the rechargeable lithium battery of FIG. 1.

The positive electrode 100, the negative electrode 200, and the separator 400 of FIG. 4 may be wound or folded to constitute an electrode assembly. The electrode assembly may be accommodated in a battery casing 500. The electrode assembly may include a plurality of electrode assemblies. The separator 400 may be provided between the electrode assemblies. The battery casing 500 may be provided therein with the electrode assemblies that are sequentially stacked. The battery casing 500 may be filled with an electrolyte (see 300 of FIG. 1). The battery casing 500 may be sealed with a cap assembly 600. The battery casing 500 according to embodiments of the present disclosure may have a cylindrical shape, a prismatic shape, or a pouch shape. A rechargeable lithium battery according to an embodiment of the present disclosure may be used in devices such as laptop computers, smartphones, or electric vehicles.

The following description will focus on some embodiments of the present disclosure. The following embodiments are provided to aid in understanding of the present disclosure and are not intended to limit the scope of the present disclosure.

### Preparation 1: First Lithium Composite Oxide of Spinel Crystal Structure

0.170 g of MnSO₄H₂O and 0.0228 g of (NH₄)₂S₂O₈ were dissolved in 100 ml of distilled water and sulfuric acid was added to adjust pH to 1, and then a reaction was performed at 130 °C for 10 hours to obtain a solid precipitate. The obtained precipitate was washed with distilled water several times and dried at 300 °C for 3 hours, preparing solid MnO₂ having an average particle diameter of 1 µm.

Li₂CO₃ and the prepared MnO₂ were mixed in a molar ratio of Li:Mn =1:2, and then heated at 600 °C for 10 hours to synthesize LiMn₂O₄ particles having an average particle diameter of 1 µm.

### Preparation 2: Large-Particle Size Lithium Composite Oxide of Layered Crystal Structure

A co-precipitation method was utilized to prepare a large-sized precursor. The following procedure was used to prepare nickel-based metal hydroxide (Ni_{0.90}Co_{0.07}Al_{0.03}(OH)₂) as a large-sized precursor.

As a raw material of nickel-based metal hydroxide, nickel sulfate (NiSO₄·6H₂O), cobalt sulfate (CoSO₄·7H₂O), and aluminium sulfate (Al₂(SO₄)₃·H₂O) were mixed in a molar ratio of 90:7:3 and dissolved in distilled water as a solvent to prepare a metal raw material mixed solution. An ammonium hydroxide (NH₄OH) diluted solution and sodium hydroxide (NaOH) as a precipitating agent were prepared to form a complex compound. Afterwards, the metal raw material mixed solution, the ammonium hydroxide, and the sodium hydroxide were introduced into a reactor. Sodium hydroxide was added to maintain pH of the mixture in the reactor. A reaction was conducted for about 20 hours while agitating the mixture in the reactor.

A slurry solution in the reactor was filtered and washed with high-purity distilled water. The washed material was dried for 24 hours in a hot-air oven at 190 °C to obtain powder of a large-sized precursor (Ni_{0.09}Co_{0.07}Al_{0.03}(OH)₂) having a particle size of about 18 µm.

The large-sized precursor and anhydrous lithium hydroxide (LiOH) were dry-mixed using a Henschel mixer. Lithium and transition metal were mixed in a molar ratio of about 1:1. The transition metal is a total amount of transition metals (Ni+Co+Al) contained in the large-sized precursor. The mixture was thermally treated for 10 hours at about 900 °C under an oxygen atmosphere (first calcination process), thereby synthesizing second particles as a second lithium composite oxide. The second particles were crushed under a pressure of 3 bar using a Jet mill.

### Preparation 3: Small Particle Size Lithium Composite Oxide of Layered Crystal Structure

A co-precipitation method was used to prepare a small-sized precursor. The following procedure was used to prepare nickel-based metal hydroxide (Ni_{0.90}Co_{0.07}Mn_{0.03}(OH)₂) as a small-sized precursor.

As a raw material of nickel-based metal hydroxide, nickel sulfate (NiSO₄·6H₂O), cobalt sulfate (CoSO₄·7H₂O), and manganese sulfate (MnSO₄·H₂O) were mixed in a molar ratio of 90:7:3 and dissolved in distilled water as a solvent to prepare a metal raw material mixed solution. The metal raw material mixed solution, ammonium hydroxide, and sodium hydroxide were introduced into a reactor and then a reaction was performed.

A slurry solution in the reactor was filtered and washed with high-purity distilled water. The washed material was dried for 24 hours in a hot-air oven at 210°C to obtain powder of a small-sized precursor (Ni_{0.90}Co_{0.07}Mn_{0.03}(OH)₂) having a size of about 3 µm.

The small-sized precursor and anhydrous lithium hydroxide (LiOH) were dry-mixed using a Henschel mixer. Lithium and transition metal were mixed in a molar ratio of about 1:1. In this case, the transition metal is a total amount of transition metals (Ni+Co+Mn) contained in the small-sized precursor. The mixture was thermally treated for 15 hours at about 750 °C under an oxygen atmosphere (second calcination process), thereby synthesizing third particles as a third lithium composite oxide. The third particles were crushed under a pressure of 3 bar using a Jet mill.

### Embodiment 1: Preparation of Composite Positive Electrode Active Material

The first particles of Preparation 1, the second particles of Preparation 2, and the third particles of Preparation 3 were mixed in a weight ratio of 60:28:12 to obtain powder of a composite positive electrode active material.

### Embodiment 2

The first particles of Preparation 1, the second particles of Preparation 2, and the third particles of Preparation 3 were mixed in a weight ratio of 70:21:9 to obtain powder of a composite positive electrode active material.

### Embodiment 3

The first particles of Preparation 1, the second particles of Preparation 2, and the third particles of Preparation 3 were mixed in a weight ratio of 80:14:6 to obtain powder of a composite positive electrode active material.

### Embodiment 4

The first particles of Preparation 1, the second particles of Preparation 2, and the third particles of Preparation 3 were mixed in a weight ratio of 90:7:3 to obtain powder of a composite positive electrode active material.

### Comparative Example 1

The first particles of Preparation 1, the second particles of Preparation 2, and the third particles of Preparation 3 were mixed in a weight ratio of 50:35:15 to obtain powder of a composite positive electrode active material.

### Comparative Example 2

The first particles of Preparation 1, the second particles of Preparation 2, and the third particles of Preparation 3 were mixed in a weight ratio of 95:3.5:1.5 to obtain powder of a composite positive electrode active material.

### Comparative Example 3

Only the first particles of Preparation 1 were used to obtain powder of a positive electrode active material.

### Manufacture of Positive Electrode

95 wt% of a positive electrode active material, 3 wt% of polyvinylidene fluoride as a binder, and 2 wt% of carbon black as a conductive material were mixed in an N-methylpyrrolidone solvent to obtain a positive electrode active material slurry. The positive electrode active material slurry was coated and dried on an aluminium current collector, and then pressed to manufacture a positive electrode.

### Manufacture of Negative Electrode

95 wt% of graphite, 3 wt% of polyvinylidene fluoride as a binder, and 2 wt% of carbon black as a conductive material were mixed in an N-methylpyrrolidone solvent to prepare a negative electrode active material slurry. The negative electrode active material slurry was coated and dried on a copper current collector, and then pressed to manufacture a negative electrode.

### Fabrication of Rechargeable Lithium Battery

The manufactured positive and negative electrodes were utilized to fabricate a coin full-cell. A polypropylene layer (Celgard^{™} 3510) was used a separator. 1.3M LiPF₆, which is dissolved in a mixed solvent containing ethylene carbonate (EC), diethyl carbonate (DEC), and fluoroethylene carbonate (FEC) mixed in a volume ratio of 3:5:2, was used as an electrolyte.

### Evaluation 1: Lifetime Characteristics

An evaluation of lifetime characteristics was conducted on rechargeable lithium batteries fabricated using the positive electrode active materials of Embodiments 1 to 4 and Comparative Examples 1 to 3.

A rechargeable lithium battery was continuously charged and discharged up to 1,000 cycles under 0.5C charge and 0.5C discharge conditions at 45°C, and then a capacity retention rate after 1,000 cycles was evaluated. The capacity retention rate was calculated according to Mathematical Equation 1 and the results are listed in Table 1. Capacity retention rate [%] = [discharge capacity at 1,000th cycle / discharge capacity at 1st cycle] × 100

**Table 1**

| Category | 1^{st} particle (wt%) | 2^{nd} particle (wt%) | 3^{rd} particle (wt%) | Capacity retention rate [%] |
|---|---|---|---|---|
| Embodiment 1 | 60 | 28 | 12 | 89.4 |
| Embodiment 2 | 70 | 21 | 9 | 93.6 |
| Embodiment 3 | 80 | 14 | 6 | 88.6 |
| Embodiment 4 | 90 | 7 | 3 | 84.2 |
| Comparative Example 1 | 50 | 35 | 15 | 79.5 |
| Comparative Example 2 | 95 | 3.5 | 1.5 | 78.1 |
| Comparative Example 3 | 100 | 0 | 0 | 77.3 |

Referring to Table 1, it may be observed that the rechargeable lithium batteries according to Embodiments 1 to 4 have capacity retention rates greater than those of the rechargeable lithium batteries according to Comparative Examples 1 to 3. For example, it may be ascertained that an excellent capacity retention rate is achieved when a weight ratio of the first, second, and third particles falls within a specific range.

### Evaluation 2: Resistance Characteristics

An evaluation of resistance characteristics was conducted on rechargeable lithium batteries fabricated using the positive electrode active materials of Embodiments 1 to 4 and Comparative Examples 1 to 3.

A rechargeable lithium battery was continuously charged and discharged up to 1,000 cycles under 0.5C charge and 0.5C discharge conditions at 45°C, and then resistance increase rate after 1,000 cycles was evaluated. The resistance increase rate was calculated according to Mathematical Equation 2 and the results are listed in Table 2. DC-IR increase rate [%] = [DC-IR (mΩ) at 1,000th cycle / DC-IR (mΩ) at 1st cycle ] × 100

**Table 2**

| Category | 1^{st} particle (wt%) | 2^{nd} particle (wt%) | 3^{rd} particle (wt%) | DC-IR increase rate (%) |
|---|---|---|---|---|
| Embodiment 1 | 60 | 28 | 12 | 162.5 |
| Embodiment 2 | 70 | 21 | 9 | 158.2 |
| Embodiment 3 | 80 | 14 | 6 | 168.7 |
| Embodiment 4 | 90 | 7 | 3 | 175.6 |
| Comparative Example 1 | 50 | 35 | 15 | 208.5 |
| Comparative Example 2 | 95 | 3.5 | 1.5 | 219.9 |
| Comparative Example 3 | 100 | 0 | 0 | 221.5 |

Referring to Table 2, it may be observed that the rechargeable lithium batteries according to Embodiments 1 to 4 have their resistance increase rate less than that of the rechargeable lithium batteries according to Comparative Examples 1 to 3. For example, it may be ascertained that a reduced resistance increase rate is achieved when a weight ratio of the first, second, and third particles falls within a specific range

In a positive electrode active material for a rechargeable lithium battery according to the present disclosure, a weight ratio of a first particles having a spinel crystal structure is greater than a sum of weight ratios of a second particle and a third particle each having a layered crystal structure.

Therefore, the positive electrode active material of the present disclosure may have a high energy density and improved lifetime characteristics. A rechargeable lithium battery including the positive electrode active material of the present disclosure may exhibit improved capacity characteristics and increased lifetime properties.

## Claims

1. A positive electrode active material comprising:
first particles that include a first lithium composite oxide having a spinel crystal structure;
second particles that include a second lithium composite oxide having a layered crystal structure; and
third particles that include a third lithium composite oxide having a layered crystal structure,
wherein an average particle diameter of the second particles is greater than an average particle diameter of the third particles,
wherein the first particle has a first weight ratio relative to a total weight of the first, second, and third particles,
wherein the second particle has a second weight ratio relative to the total weight,
wherein the third particle has a third weight ratio relative to the total weight, and
wherein the first weight ratio is greater than a sum of the second weight ratio and the third weight ratio.

2. The positive electrode active material of claim 1, wherein the average particle diameter of the second particles is about four times to about twenty times the average particle diameter of the third particles.

3. The positive electrode active material of claim 1 or claim 2, wherein each of the second particles includes secondary particle that includes a plurality of primary particles,
wherein the primary particles are radially disposed from centers to surfaces of the second particles.

4. The positive electrode active material of any preceding claim, wherein the first lithium composite oxide is represented by Chemical Formula 1:
LiₐM₂O₄
wherein 1.0≤a≤1.1, and M includes manganese and one or more of non-manganese elements of Groups 4 to 13.

5. The positive electrode active material of any preceding claim, wherein the first lithium composite oxide is represented by Chemical Formula 2:
LiₐMn_{b}M1_{c}M2_{d}O₄
wherein 0.9≤a≤1.1, 0<b≤2.0, 0≤c<2.0, 0≤d<0.1, and b+c+d=2, and M1 and M2 are different from each other and are each independently includes one of Co, Ni, V, Cr, Fe, Zr, Re, Al, B, Ge, Ru, Sn, Ti, Nb, Mo, and Pt.

6. The positive electrode active material of any preceding claim 1, wherein the first lithium composite oxide is represented by Chemical Formula 3:
LiₐMn_{b}Co_{c}M2_{d}O₄
wherein 0.9≤a≤1.1, 0<b<2.0, 0<c<2.0, 0≤d<0.1, and b+c+d=2, and M2 includes one of V, Cr, Fe, Zr, Re, Al, B, Ge, Ru, Sn, Ti, Nb, Mo, and Pt.

7. The positive electrode active material of any preceding claim, wherein the second lithium composite oxide and the third lithium composite oxide are each independently represented by Chemical Formula 4:
LiₐM'O₂
wherein 0.9≤a≤1.1 and M' includes nickel and one or more of non-nickel elements of Groups 4 to 13, and an amount of nickel in M' is equal to or greater than about 70% and less than 100%.

8. The positive electrode active material of any preceding claim, wherein the second lithium composite oxide and the third lithium composite oxide are each independently represented by Chemical Formula 5:
LiₐNi_{b}M3_{c}M4_{d}M5ₑO₂
wherein 0.9≤a≤1.1, 0.7<b<1.0, 0<c<0.3, 0<d<0.3, 0≤e<0.1, and b+c+d+e=1, and M3, M4, and M5 are different from each other and are each independently include one of Mn, V, Cr, Fe, Co, Zr, Re, Al, B, Ge, Ru, Sn, Ti, Nb, Mo, and Pt.

9. The positive electrode active material of any preceding claim, wherein the second lithium composite oxide and the third lithium composite oxide are each independently represented by Chemical Formula 6:
LiₐNi_{b}Co_{c}Mn_{d}M5ₑO₂
wherein 0.9≤a≤1.1, 0.7<b<1.0, 0<c<0.3, 0<d<0.3, 0≤e<0.1, and b+c+d+e=1, and M5 includes one of V, Cr, Fe, Zr, Re, Al, B, Ge, Ru, Sn, Ti, Nb, Mo, and Pt.

10. The positive electrode active material of any preceding claim, wherein the second lithium composite oxide and the third lithium composite oxide are each independently represented by Chemical Formula 7:
aLi₂MnO₃-(1-a)LiM'O₂
wherein 0<a<1, and M' includes one of Ni, Co, Mn, V, Cr, Fe, Zr, Re, Al, B, Ge, Ru, Sn, Ti, Nb, Mo, and Pt.

11. The positive electrode active material of any preceding claim, wherein the first weight ratio is about 60 wt% to about 90 wt%.

12. The positive electrode active material of any preceding claim, wherein the second weight ratio is greater than the first weight ratio.

13. The positive electrode active material of any preceding claim, wherein the second weight ratio is about 5 wt% to about 30 wt%, and the third weight ratio is about 3 wt% to about 12 wt%.

14. A positive electrode comprising the positive electrode active material as claimed in any one of claims 1 to 13.

15. A rechargeable lithium battery comprising the positive electrode as claimed in claim 14.
